# EUROPÄISCHE PATENTSCHRIFT

(11) **EP 3 362 702 B1**
(45) Veröffentlichungstag und Bekanntmachung des Hinweises auf die Patenterteilung: **14.04.2021**
(21) Anmeldenummer: 16805969.9
(22) Anmeldetag: 12.10.2016
(51) Int. Cl.: F16F 13/10

(54) **LAGERUNGSEINRICHTUNG**
HYDRAULIC MOUNT
SUPPORT HYDRAULIQUE

(30) Priorität: 12.10.2015 WO PCT/EP2015/189374; 28.11.2015 DE 102015015487
(43) Veröffentlichungstag der Anmeldung: 22.08.2018
(73) Patentinhaber: Audi AG, 85045 Ingolstadt (DE); Vibracoustic GmbH, 64293 Darmstadt (DE)
(72) Erfinder: VOLLMANN, Stefan, 85049 Ingolstadt-Gerolfing (DE); MEYER, Christian, 85408 Gammelsdorf (DE); SCHEMER, Thomas, 69469 Weinheim (DE); STÖCKER, Timo, 69502 Hemsbach (DE)
(86) Internationale Anmeldenummer: PCT/EP2016/001689
(87) Internationale Veröffentlichungsnummer: WO 2017/063736

(56) Entgegenhaltungen:
- EP-A1- 2 503 181
- EP-A1- 3 032 136
- EP-A2- 0 142 943
- DE-A1- 3 801 108
- DE-A1- 3 829 907
- JP-A- H10 274 279

## Beschreibung

Die Erfindung betrifft eine Lagerungseinrichtung, insbesondere zur Lagerung eines Kraftfahrzeugaggregats an einer Kraftfahrzeugkarosserie, mit einer Fluidarbeitskammer, die über wenigstens einen Fluidkanal mit einer in einem Gehäuse der Lagerungseinrichtung vorliegenden Fluidausgleichskammer in Strömungsverbindung steht, wobei die Fluidarbeitskammer und die Fluidausgleichskammer von einem Trennelement separiert sind, in dem der wenigstens eine Fluidkanal vorliegt.

Die Lagerungseinrichtung dient zur dämpfenden Lagerung eines Kraftfahrzeugaggregats, beispielsweise einer Brennkraftmaschine, an einer weiteren Einrichtung, vorzugsweise der Kraftfahrzeugkarosserie. Die Lagerungseinrichtung kann insoweit auch als Dämpfungseinrichtung bezeichnet werden. Es kann vorgesehen sein, dass die Lagerungseinrichtung an einem Hilfsrahmen, auch als Fahrschemel bezeichnet, befestigt ist, welcher seinerseits an einer Tragstruktur der Kraftfahrzeugkarosserie befestigt ist. Der Hilfsrahmen kann insoweit zusammen mit der Tragstruktur die Kraftfahrzeugkarosserie darstellen. Das Kraftfahrzeugaggregat ist also über die Lagerungseinrichtung mit dem Hilfsrahmen und entsprechend der Kraftfahrzeugkarosserie verbunden beziehungsweise verbindbar.

Ist die Lagerungseinrichtung zur Lagerung der Brennkraftmaschine an der Kraftfahrzeugkarosserie vorgesehen, so ist auch die Bezeichnung Motorlager gebräuchlich. Nachfolgend wird lediglich auf die Verwendung der Lagerungseinrichtung als Motorlager, also die Verwendung zur Lagerung des Kraftfahrzeugaggregats beziehungsweise der Brennkraftmaschine an der Kraftfahrzeugkarosserie, eingegangen. Selbstverständlich kann die Lagerungseinrichtung jedoch auch für andere Einsatzzwecke vorgesehen sein, wobei die nachfolgenden Ausführungen in analoger Weise herangezogen werden können.

Das Kraftfahrzeugaggregat ist über die Lagerungseinrichtung an der Kraftfahrzeugkarosserie befestigt, insbesondere stützt es sich über die Lagerungseinrichtung an der Kraftfahrzeugkarosserie ab. Die Lagerungseinrichtung ist insoweit derart zwischen dem Kraftfahrzeugaggregat und der Kraftfahrzeugkarosserie angeordnet, dass sie von dem auf das Kraftfahrzeugaggregat wirkenden Schwerkrafteinfluss in Richtung der Kraftfahrzeugkarosserie gedrängt wird. Vorzugsweise ist nicht lediglich eine einzige Lagerungseinrichtung zur Lagerung des Kraftfahrzeugaggregats vorgesehen, sondern vielmehr eine Vielzahl von Lagerungseinrichtungen, welche identisch oder zumindest analog zu der beschriebenen Lagerungseinrichtung ausgestaltet sind.

Die Lagerungseinrichtung weist die Fluidarbeitskammer sowie die Fluidausgleichskammer auf. Diese stehen über den Fluidkanal miteinander in Strömungsverbindung. Vorzugsweise liegt die Fluidarbeitskammer in der Wirkverbindung zwischen dem Kraftfahrzeugaggregat und der Kraftfahrzeugkarosserie vor. Das bedeutet, dass sich das Kraftfahrzeugaggregat über die Fluidarbeitskammer beziehungsweise das in dieser vorliegende Fluid an der Kraftfahrzeugkarosserie abstützt. Bei einer Verlagerung des Kraftfahrzeugaggregats, beispielsweise aufgrund von Schwingungen, verändert sich insoweit das Volumen der Fluidarbeitskammer.

Das in der Fluidarbeitskammer befindliche Fluid wird bei einer Verringerung des Volumens aus der Fluidarbeitskammer über den Fluidkanal in die Fluidausgleichskammer gedrängt. Vergrößert sich das Volumen dagegen, so kann das Fluid aus der Fluidausgleichskammer über den Fluidkanal zurück in die Fluidarbeitskammer strömen. Die Lagerungseinrichtung dient der schwingungsdämpfenden Lagerung des Kraftfahrzeugaggregats, soll also die Übertragung von Schwingungen von dem Kraftfahrzeugaggregat auf die Kraftfahrzeugkarosserie unterbinden oder zumindest dämpfen. In dem Fluidkanal kann hierzu wenigstens eine Drossel vorliegen, sodass das Dämpfungsverhalten der Lagerungseinrichtung mittels der Drossel eingestellt werden kann.

Das Volumen der Fluidausgleichskammer ist nicht oder allenfalls in geringem Ausmaß in der Wirkverbindung zwischen dem Kraftfahrzeugaggregat und der Kraftfahrzeugkarosserie angeordnet. Beispielsweise liegt hierzu die Fluidausgleichskammer in dem Gehäuse der Lagerungseinrichtung vor, wobei das Gehäuse insbesondere starr ist. Zwar kann es vorgesehen sein, dass sich das Kraftfahrzeugaggregat über das Gehäuse an der Kraftfahrzeugkarosserie abstützt, aufgrund der starren Ausgestaltung bewirkt das Gewicht des Kraftfahrzeugaggregats jedoch zumindest nicht unmittelbar eine Veränderung des Volumens der Fluidausgleichskammer.

Diesbezüglich offenbart das Dokument DE 38 01 108 A1 eine Lagerungseinrichtung entsprechend dem Oberbegriff des Anspruchs 1.

Es ist nun Aufgabe der Erfindung, eine Lagerungseinrichtung vorzuschlagen, welche gegenüber bekannten Lagerungseirichtungen Vorteile aufweist, insbesondere eine zuverlässige Dämpfung von Schwingungen des Kraftfahrzeugaggregats bei gleichzeitig geringen Baukosten und besserer Einstellbarkeit des Dämpfungsverhaltens der Lagerungseinrichtung ermöglicht.

Dies wird erfindungsgemäße mit einer Lagerungseinrichtung mit den Merkmalen des Anspruchs 1 erreicht. Dabei ist vorgesehen, dass das Trennelement mittels eines in Umfangsrichtung das Trennelement umgreifenden elastischen Elements von dem Gehäuse entkoppelt ist, wobei das Gehäuse eine die Fluidausgleichskammer aufnehmende Abdeckung und ein einen Federkörper der Lagerungseinrichtung haltendes Stützteil aufweist, wobei die Abdeckung zwischen das Stützteil und das elastische Element derart eingreift, dass in radialer Richtung bezüglich einer Längsmittelachse der Lagerungseinrichtung gesehen das elastische Element, die Abdeckung und das Stützteil aufeinander folgen.

Das Trennelement separiert die Fluidarbeitskammer von der Fluidausgleichskammer und weist zudem den wenigstens einen Fluidkanal auf, über welchen die Fluidarbeitskammer und die Fluidausgleichskammer miteinander in Strömungsverbindung stehen. Das Trennelement liegt insoweit zwischen der Fluidarbeitskammer und der Fluidausgleichskammer vor. Zur Herstellung der Fluidverbindung zwischen der Fluidarbeitskammer und der Fluidausgleichskammer ist in dem Trennelement der wenigstens eine Fluidkanal ausgebildet. Selbstverständlich kann es alternativ auch vorgesehen sein, dass der Fluidkanal von dem Trennelement gebildet wird beziehungsweise dass das Trennelement den Fluidkanal zumindest bereichsweise mitausbildet. Das Trennelement ist vorzugsweise in dem Gehäuse oder zumindest an diesem angeordnet. Beispielsweise ist das Trennelement an dem Gehäuse befestigt.

Der Fluidkanal kann zumindest bereichsweise düsenförmig ausgestaltet sein beziehungsweise in Gänze als Düse vorliegen. Beispielsweise ist der Fluidkanal entlang seiner gesamten Längserstreckung im Querschnitt rund. Zusätzlich oder alternativ kann er über die gesamte Längserstreckung gerade sein oder zumindest abschnittsweise gekrümmt verlaufen. Beispielsweise weist der Fluidkanal an seinem in die Fluidarbeitskammer einmündenden Ende und/oder an seinem in die Fluidausgleichskammer einmündenden Ende eine Aufweitung auf, sodass sich der Durchmesser des Fluidkanals in Richtung der Fluidarbeitskammer und/oder in Richtung der Fluidausgleichskammer vergrößert.

Das Trennelement steht beispielsweise senkrecht oder zumindest nahezu senkrecht auf einer Längsmittelachse der Lagerungseinrichtung. Es ist schwimmend in dem Gehäuse der Lagerungseinrichtung angeordnet, beziehungsweise in diesem gelagert. Das bedeutet, dass sich das Trennelement zumindest geringfügig bezüglich des Gehäuses verlagern kann, insbesondere bezüglich der Längsmittelachse der Lagerungseinrichtung in radialer Richtung und/oder axialer Richtung. Zu diesem Zweck ist das elastische Element vorgesehen, welches das Trennelement in Umfangsrichtung bezüglich der Längsmittelachse vorzugsweise vollständig umgreift.

Es ist insoweit vorgesehen, dass das Trennelement beabstandet von dem Gehäuse beziehungsweise von Gehäusewänden des Gehäuses beabstandet angeordnet ist, also mit dem Gehäuse beziehungsweise den Gehäusewänden nicht in Berührkontakt steht. Zur Beabstandung des Trennelements von dem Gehäuse ist das elastische Element vorgesehen. Beispielsweise liegt das elastische Element in Umfangsrichtung durchgehend zwischen dem Trennelement und dem Gehäuse beziehungsweise den Gehäusewandungen vor und hält das Trennelement auf Abstand von diesem beziehungsweise diesen. Als Trennelement kommt beispielsweise ein Faltenbalg zum Einsatz, in welchem die Fluidausgleichskammer wenigstens bereichsweise, insbesondere vollständig, ausgebildet ist. Beispielsweise wird die Fluidausgleichskammer von dem elastischen Element beziehungsweise dem Faltenbalg einerseits und dem Trennelement andererseits begrenzt. Zu diesem Zweck kann das elastische Element fluiddicht mit dem Trennelement verbunden beziehungsweise an diesem befestigt sein.

Vorzugsweise bestehen die Abdeckung und/oder das Trennelement aus einem starren Material beziehungsweise starren Materialien. Das bedeutet, dass das Trennelement das elastische Element in radialer Richtung nach außen in Richtung der Abdeckung drängt, während die Abdeckung ihrerseits das elastische Element in radialer Richtung nach innen in Richtung des Trennelements drängt. Durch die Anordnung des elastischen Elements zwischen der Abdeckung und dem Trennelement wird letzteres von dem Gehäuse und insbesondere der Abdeckung entkoppelt. Zugleich wird jedoch eine zuverlässige Befestigung des elastischen Elements erzielt, nämlich indem dieses zwischen der Abdeckung und dem Trennelement zumindest kraftschlüssig befestigt ist. Zusätzlich kann eine Formschlussverbindung zwischen dem elastischen Element und der Abdeckung einerseits und/oder dem Trennelement andererseits vorgesehen sein.

Es ist weiterhin vorgesehen, dass das Gehäuse die Abdeckung und das Stützteil aufweist, wobei die Abdeckung zwischen das Stützteil und das elastische Element eingreift. Die Abdeckung dient der Aufnahme der Fluidausgleichskammer und/oder des elastischen Elements. Die Abdeckung weist dabei einen Vorsprung, insbesondere einen zentralen Vorsprung, auf, der in die Ringform der Fluidausgleichskammer eingreift. Erfindungsgemäß ragt der Vorsprung bis hin zu dem Trennelement. Besonders bevorzugt ist das elastische Element zwischen der Abdeckung und dem Trennelement klemmend gehalten. Zusätzlich oder alternativ kann eine Formschlussverbindung vorgesehen sein.

Das Stützteil dient beispielsweise der Anbindung beziehungsweise Befestigung einer ersten Lagerstelle, an welchem das Kraftfahrzeugaggregat befestigbar ist. Beispielsweise ist die erste Lagerstelle über den Federkörper, insbesondere einen Elastomerkörper, angebunden. Das Stützteil ist zum Abstützen beziehungsweise Halten des Federkörpers ausgebildet. Der Federkörper ist also mittels des Stützteils befestigt. Beispielsweise ist der Federkörper an das Stützteil angegossen beziehungsweise angespritzt. Das Stützteil besteht bevorzugt aus einem steiferen Material als der Federkörper, insbesondere aus Metall, bevorzugt Stahl.

Beispielsweise liegt die erste Lagerstelle an einem Lagerdeckel vor, der den Federkörper, insbesondere den Elastomerkörper, aufweist. Der Federkörper ist bevorzugt über einen Lagerkern mit der ersten Lagerstelle verbunden. Selbstverständlich kann jedoch auch die erste Lagerstelle unmittelbar an dem Federkörper vorliegen. Beispielsweise ist der Lagerkern in dem Federkörper aufgenommen, insbesondere in diesen eingegossen. Auf diese Art und Weise wird ein zuverlässiger Halt der ersten Lagerstelle bezüglich des Federkörpers erzielt. Der Federkörper begrenzt gemeinsam mit dem Trennelement die Fluidarbeitskammer. Beispielsweise weist der Federkörper eine Ausnehmung auf, welche von dem Trennelement übergriffen beziehungsweise verschlossen wird. Der Federkörper kann das Trennelement seitlich umgreifen, sodass es beispielsweise - in axialer Richtung gesehen - mit der Abdeckung überlappend angeordnet ist.

Um eine dauerhafte und stabile Befestigung der Abdeckung an dem Stützteil zu realisieren, soll die Abdeckung zwischen das Stützteil und das elastische Element eingreifen. Dabei liegt die Abdeckung vorzugsweise einerseits an dem Stützteil und andererseits an dem elastischen Element an, insbesondere in radialer Richtung außen an dem Stützteil und in radialer Richtung innen an dem elastischen Element. In radialer Richtung bezüglich der Längsmittelachse der Lagerungseinrichtung gesehen folgen also das elastische Element, die Abdeckung und das Stützteil unmittelbar aufeinander.

Das bedeutet insbesondere, dass das elastische Element, die Abdeckung und das Stützteil in axialer Richtung gesehen einander überlappen, also jeweils bereichsweise an derselben Axialposition bezüglich der Längsmittelachse angeordnet sind. Die drei genannten Elemente liegen insoweit in einer auf der Längsmittelachse der Lagerungseinrichtung senkrecht stehenden, gedachten Ebene. Die Verbindung zwischen der Abdeckung und dem Stützteil kann als Formschlussverbindung vorliegen. Beispielsweise wird bei einer Montage der Lagerungseinrichtung das Stützteil umgebördelt, sodass es einen Bereich der Abdeckung hintergreift. Dieses ist bevorzugt auf der dem Federkörper abgewandten Seite des Stützteils vorgesehen.

In einer weiteren Ausgestaltung der Erfindung ist vorgesehen, dass das elastische Element zusammen mit dem Trennelement die Fluidausgleichskammer einfasst. Hierauf wurde vorstehend bereits hingewiesen. Die Fluidausgleichskammer ist beispielsweise ringförmig oder zumindest näherungsweise ringförmig. Sie wird auf ihrer in radialer Richtung innenliegenden Seite und auf ihrer in radialer Richtung außenliegenden Seite von Seitenwänden des elastischen Elements begrenzt, wobei die Seitenwände des elastischen Elements von einem Bodenteil des elastischen Elements miteinander verbunden werden. Das elastische Element hat beispielsweise zumindest näherungsweise die Form eines Rotationskörpers, bei welchem eine U-Form um eine Mittelachse, vorzugsweise die Längsmittelachse der Lagerungseinrichtung, rotiert wird.

Auf der dem Bodenteil gegenüberliegenden Seite des elastischen Elements ist das Trennelement an dem elastischen Element angeordnet beziehungsweise befestigt, sodass das elastische Element und das Trennelement gemeinsam die Fluidausgleichskammer einschließen. Dabei ist das elastische Element vorzugsweise fluiddicht mit dem Trennelement verbunden, sodass Fluid lediglich durch den wenigstens einen Fluidkanal aus der Fluidausgleichskammer heraus oder in diese hinein gelangen kann.

Im Rahmen einer weiteren Ausgestaltung der Erfindung ist vorgesehen, dass das Trennelement über das elastische Element an dem Gehäuse befestigt ist. Mittels des Trennelements wird insoweit nicht nur die Entkopplung des Trennelements von dem Gehäuse erzielt, sondern zudem eine Befestigung des Trennelements an dem Gehäuse erreicht. Über das elastische Element liegt insoweit eine Halteverbindung zwischen dem Trennelement und dem Gehäuse vor. Besonders bevorzugt ist das Trennelement ausschließlich über das elastische Element an dem Gehäuse befestigt, ist also durchgehend von dem Gehäuse beziehungsweise Gehäusewänden beabstandet angeordnet.

Eine bevorzugte weitere Ausgestaltung der Erfindung sieht vor, dass der Federkörper über das Stützteil in einer Führungsausnehmung einer Führungseinrichtung befestigt ist, wobei das Stützteil zwischen die Führungseinrichtung und die Abdeckung derart eingreift, dass in radialer Richtung bezüglich der Längsmittelachse gesehen das elastische Element, die Abdeckung, das Stützteil und die Führungseinrichtung aufeinander folgen. Dabei liegt das Stützteil vorzugsweise einerseits an der Abdeckung und andererseits an der Führungseinrichtung an, insbesondere in radialer Richtung außen an der Führungseinrichtung und in radialer Richtung innen an der Abdeckung.

Es ist also zum Beispiel vorgesehen, dass das elastische Element, die Abdeckung, das Stützteil und die Führungseinrichtung in axialer Richtung gesehen einander überlappen, also jeweils bereichsweise an derselben Axialposition bezüglich der Längsmittelachse angeordnet sind. Die vier genannten Elemente liegen insoweit in der auf der Längsmittelachse der Lagerungseinrichtung senkrecht stehenden, gedachten Ebene. Zusätzlich kann eine entsprechende Anordnung auch für das Trennelement vorgesehen sein, sodass insgesamt fünf Elemente in der gedachten Ebene angeordnet sind, also in axialer Richtung miteinander überlappen.

Eine Weiterbildung der Erfindung sieht vor, dass das elastische Element zwischen der Abdeckung und dem Stützteil angeordnet, insbesondere klemmend gehalten ist. Beispielsweise liegt das elastische Element in axialer Richtung gesehen zwischen der Abdeckung und dem Stützteil vor, insbesondere zwischen einem freien Ende der Abdeckung und einer Anlagefläche des Stützteils. Die Anlagefläche wird beispielsweise von einem in radialer Richtung nach außen verlaufenden oder umgebogenen Bereich der Stützteils gebildet. Bevorzugt liegt das elastische Element in axialer Richtung gesehen einerseits an der Abdeckung und andererseits an dem Stützteil, insbesondere der Anlagefläche, an. Es kann zwischen diesen eingeklemmt, also von diesen kraftschlüssig gehalten sein.

Eine weitere Ausgestaltung der Erfindung sieht vor, dass das Stützteil die Abdeckung in axialer Richtung bereichsweise übergreift und formschlüssig an der Abdeckung befestigt ist. Hierauf wurde vorstehend bereits hingewiesen. Die formschlüssige Befestigung des Stützteils an der Abdeckung kann beispielsweise durch eine Umbördelung des Stützteils hergestellt sein. Besonders bevorzugt liegt das Stützteil und insbesondere die Umbördelung unmittelbar an der Abdeckung an. Es ist insoweit kein zusätzliches Element zwischen dem Stützteil und der Abdeckung vorgesehen.

Eine weitere bevorzugte Ausführungsform der Erfindung sieht vor, dass das elastische Element eine Trennelementaufnahmenut für das Trennelement aufweist. Die Trennelementaufnahmenut ist vorzugsweise in Umfangsrichtung durchgehend ausgebildet, sodass das Trennelement ebenfalls in Umfangsrichtung durchgehend in dieser angeordnet ist. Sie kann jedoch auch unterbrochen sein und insoweit aus mehreren voneinander beabstandeten Nutabschnitten bestehen. Mithilfe der Trennelementaufnahmenut wird eine formschlüssige Verbindung des Trennelements an dem elastischen Element hergestellt. Die Trennelementaufnahmenut ist dabei vorzugsweise derart ausgestaltet, dass eine Verlagerung des Trennelements in axialer Richtung bezüglich des elastischen Elements verhindert wird, insbesondere durch Ausbildung einer Formschlussverbindung.

Beispielweise ist in einer weiteren Ausgestaltung der Erfindung vorgesehen, dass das Trennelement einen ersten Teil und einen zweiten Teil aufweist, wobei die beiden Teile aneinander befestigt sind und/oder beide in die Trennelementaufnahmenut eingreifen. Das Trennelement ist insoweit mehrteilig ausgestaltet und verfügt zumindest über den ersten Teil und den zweiten Teil. Diese können aneinander befestigt sein, beispielsweise sind sie miteinander vernietet. Zu diesem Zweck durchgreifen vorzugsweise Nietvorsprünge des ersten Teils den zweiten Teil und sind auf der dem ersten Teil abgewandten Seite des zweiten Teils aufgeweitet, beispielsweise durch Verpressen oder Vertaumeln, sodass die beiden Teile zuverlässig miteinander verbunden sind.

Zusätzlich oder alternativ ist vorgesehen, dass die beiden Teile in die Trennelementaufnahmenut eingreifen. Diese ist dabei beispielsweise derart vorgesehen, dass die beiden Teile in axialer Richtung aufeinander zu gedrängt werden. Entsprechend werden die beiden Teile durch das Eingreifen in die Trennelementaufnahmenut von dem elastischen Element jeweils mit einer Kraft beaufschlagt, welche sie in Richtung des jeweils anderen Teils drängen, sodass die beiden Teile vorzugsweise zumindest bereichsweise aneinander anliegen.

Eine Ausführungsform der Erfindung sieht vor, dass an dem Trennelement eine elastische Membran befestigt ist, insbesondere zwischen dem ersten Teil und dem zweiten Teil klemmend gehalten ist, die eine Fluiddämpfungskammer strömungstechnisch von der Fluidarbeitskammer separiert, wobei die Fluiddämpfungskammer über einen Drosselkanal mit einer Außenumgebung der Lagerungseinrichtung in Strömungsverbindung steht. Neben der Fluidarbeitskammer und der Fluidausgleichskammer verfügt die Lagerungseinrichtung also über die Fluiddämpfungskammer. Vorzugsweise ist die Fluiddämpfungskammer vollständig oder zumindest nahezu vollständig von der Fluidarbeitskammer und/oder der Fluidausgleichskammer strömungstechnisch getrennt. Das bedeutet, dass das Fluid aus der Fluidarbeitskammer und/oder der Fluidausgleichskammer nicht in die Fluiddämpfungskammer gelangen kann und umgekehrt. Hierzu ist zwischen der Fluidarbeitsammer und der Fluiddämpfungskammer die elastische Membran angeordnet, welche fluiddicht oder zumindest nahezu fluiddicht ist.

Treten tieffrequente Schwingungen der Brennkraftmaschine, insbesondere mit großem Hub beziehungsweise großer Schwingungsenergie auf, so kann das Fluid aus der Fluidarbeitskammer über den Fluidkanal in Richtung der Fluidausgleichskammer strömen beziehungsweise umgekehrt. Mithilfe der Strömungsverbindung zwischen der Fluidarbeitskammer und der Fluidausgleichskammer werden folglich solche tieffrequente Schwingungen zuverlässig gedämpft. Weil bei diesen Schwingungen die Membran stark in Richtung der Fluiddämpfungskammer ausgelenkt wird, kann in der Fluiddämpfungskammer ein hoher Druck auftreten.

Weil aufgrund des hohen Drucks eine unerwünschte Geräuschbildung auftreten kann, ist in einer Ausgestaltung der Erfindung ein Drosselkanal vorgesehen, über welchen ein Druckausgleich zwischen dem in der Fluiddämpfungskammer befindlichen Fluid und der Außenumgebung ablaufen kann. Über den Drosselkanal steht die Fluiddämpfungskammer in Strömungsverbindung mit der Außenumgebung der Lagerungseinrichtung. Eine derartige Ausgestaltung hat den Vorteil, dass mittels der elastischen Membran und/oder dem in der Fluiddämpfungskammer vorliegenden Fluid eine effiziente Dämpfung auch von hochfrequenten Schwingungen der Brennkraftmaschine vorgenommen werden kann, ohne dass die erwähnte Geräuschbildung auftritt. Dem Drosselkanal kann zudem ein Querschnittsverstellelement zugeordnet sein, mittels welchem der Durchströmungsquerschnitt des Drosselkanals verstellbar ist. Das Querschnittsverstellelement liegt beispielsweise in Form eines Stellventils oder dergleichen vor. Das Stellventil kann dabei als diskret schaltendes Stellventil oder als Stetigventil ausgestaltet sein.

Die elastische Membran ist an dem Trennelement befestigt. Hierzu greift sie beispielsweise zumindest bereichsweise in das Trennelement ein, sodass sie formschlüssig und/oder kraftschlüssig an diesem gehalten ist. Ist das Trennelement mehrteilig ausgebildet und weist insoweit zumindest den ersten Teil sowie den zweiten Teil auf, kann die elastische Membran zwischen dem ersten Teil und dem zweiten Teil klemmend gehalten sein. In dem ersten Teil, welcher vorzugsweise in oder an dem Gehäuse angeordnet beiziehungsweise befestigt ist, liegt der zumindest eine Fluidkanal vor. Der zweite Teil des Trennelements ist an dem ersten Teil befestigt und übergreift diesen vorzugsweise seitens der Fluidarbeitskammer. Beispielsweise ist er dabei derart angeordnet, dass er die Membran in Richtung des ersten Teils drängt beziehungsweise an diesem festsetzt. Beispielsweise weisen sowohl der erste Teil als auch der zweite Teil des Trennelements jeweils eine Ausnehmung auf, in welche die Membran beziehungsweise ein Randvorsprung der Membran jeweils eingreift.

Schließlich ist im Rahmen einer weiteren Ausgestaltung der Erfindung vorgesehen, dass die Fluiddämpfungskammer in dem Trennelement angeordnet ist. Somit wird eine bauraumeffiziente Ausgestaltung der Lagerungseinrichtung erzielt. Beispielsweise weist das Trennelement zur Ausbildung der Fluiddämpfungskammer eine Vertiefung auf, welche in Richtung der Fluidarbeitskammer geöffnet ist. Die Membran übergreift nun die Fluiddämpfungskammer beziehungsweise die Vertiefung vollständig, sodass die Fluiddämpfungskammer von der Fluidarbeitskammer strömungstechnisch getrennt ist.

Zusätzlich oder alternativ kann in einer weiteren Ausgestaltung der Erfindung vorgesehen sein, dass eine erste Lagerstelle, insbesondere für das Kraftfahrzeugaggregat, an einem die Fluidarbeitskammer zusammen mit dem Trennelement begrenzenden Lagerdeckel angeordnet ist und/oder eine zweite Lagerstelle, insbesondere für die Kraftfahrzeugkarosserie, mit dem Gehäuse verbunden ist. Die Dämpfungswirkung der Lagerungseinrichtung liegt dabei zwischen der ersten Lagerstelle und der zweiten Lagerstelle vor. Mit der ersten Lagerstelle wird vorzugsweise das Kraftfahrzeugaggregat und mit der zweiten Lagerstelle die Kraftfahrzeugkarosserie verbunden, insbesondere unmittelbar. Die erste Lagerstelle liegt an dem Lagerdeckel vor, welcher die Fluidarbeitskammer wenigstens bereichsweise begrenzt, insbesondere zusammen mit dem Trennelement. Beispielsweise weist hierzu der Lagerdeckel eine die Fluidarbeitskammer darstellende Ausnehmung auf, welche von dem Trennelement verschlossen ist. Die zweite Lagerstelle kann dagegen mit dem Gehäuse verbunden sein, vorzugsweise starr.

Die Erfindung betrifft selbstverständlich auch ein Kraftfahrzeug, mit einem Kraftfahrzeugaggregat, einer Kraftfahrzeugkarosserie sowie einer Lagerungseinrichtung, über welche das Kraftfahrzeugaggregat an der Kraftfahrzeugkarosserie gelagert ist, wobei die Lagerungseinrichtung über eine Fluidarbeitskammer verfügt, die über wenigstens einen Fluidkanal mit einer in einem Gehäuse der Lagerungseinrichtung vorliegenden Fluidausgleichskammer in Strömungsverbindung steht, wobei die Fluidarbeitskammer und die Fluidausgleichskammer von einem Trennelement separiert sind, in dem der wenigstens eine Fluidkanal vorliegt. Dabei ist vorgesehen, dass das Trennelement mittels eines in Umfangsrichtung das Trennelement umgreifenden elastischen Elements von dem Gehäuse entkoppelt ist.

Auf die Vorteile einer derartigen Ausgestaltung des Kraftfahrzeugs beziehungsweise der Lagerungseinrichtung wurde bereits hingewiesen. Sowohl das Kraftfahrzeug als auch die Lagerungseinrichtung können gemäß den vorstehenden Ausführungen weitergebildet sein, sodass insoweit auf diese verwiesen wird.

Die Erfindung wird nachfolgend anhand der in Zeichnung dargestellten Ausführungsbeispiele näher erläutert, ohne dass eine Beschränkung der Erfindung erfolgt. Dabei zeigt:
Figur 1 eine Längsschnittdarstellung durch eine Lagerungseinrichtung zur Lagerung eines Kraftfahrzeugaggregats an einer Kraftfahrzeugkarosserie, sowie
Figur 2 eine Detaildarstellung eines Bereichs der Lagerungseinrichtung.

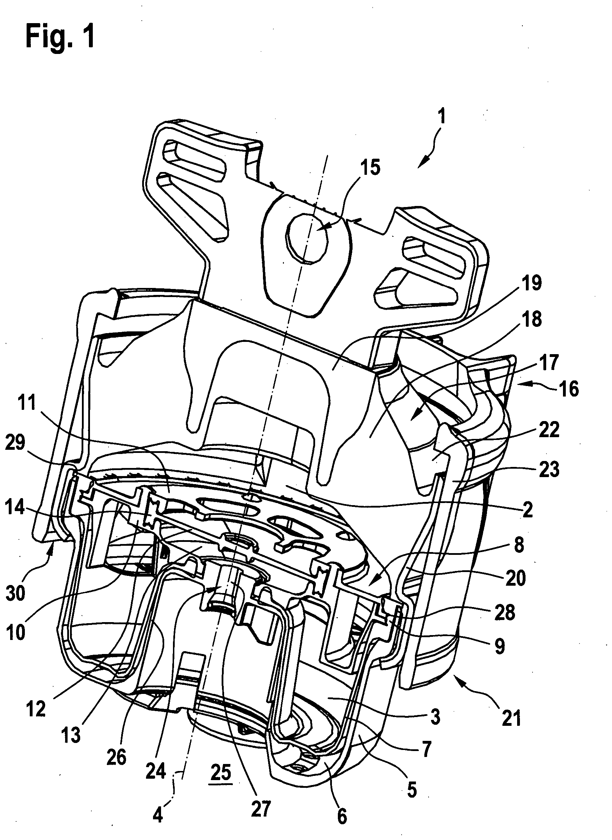

Die Figur 1 zeigt eine Längsschnittdarstellung durch eine Lagerungseinrichtung 1. Diese dient beispielsweise der dämpfenden Verbindung zwischen einem Kraftfahrzeugaggregat, insbesondere einer Brennkraftmaschine, sowie einer weiteren Einrichtung, beispielsweise einer Kraftfahrzeugkarosserie eines Kraftfahrzeugs. Die Lagerungseinrichtung 1 weist eine Fluidarbeitskammer 2 sowie eine Fluidausgleichskammer 3 auf. Eine Längsmittelachse 4 der Lagerungseinrichtung 1, entlang welcher der Längsschnitt vorliegt, ist angedeutet. Die Fluidarbeitskammer 2 und die Fluidausgleichskammer 3 stehen über wenigstens einen Fluidkanal miteinander in Strömungsverbindung.

Die Fluidausgleichskammer 3 ist in einer Abdeckung 5 der Lagerungseinrichtung 1 angeordnet. Beispielsweise weist der Abdeckung 5 hierzu eine ringförmige Ausnehmung 6 auf, in welcher die Fluidausgleichskammer 3 vorliegt. Zur Ausbildung der Fluidausgleichskammer 3 kann es vorgesehen sein, dass in der Abdeckung 5, insbesondere in der ringförmigen Ausnehmung 6, ein elastisches Element 7, insbesondere ein Elastomerelement angeordnet ist. Dieses kann zur Ausbildung der Fluidausgleichskammer 3 an einem Trennelement 8 fluiddicht befestigt sein. Beispielsweise weist das Element 7 einen Haltebereich 9 auf, der zwischen dem Trennelement 8 und der Abdeckung 5 klemmend gehalten ist.

Das Trennelement 8 dient der Separierung der Fluidarbeitskammer 2 und der Fluidausgleichskammer 3. Entsprechend ist das Trennelement 8 zwischen diesen angeordnet. In dem Trennelement 8 liegt der wenigstens eine Fluidkanal vor, über welchen die Fluidarbeitskammer 2 und die Fluidausgleichskammer 3 in Strömungsverbindung stehen, insbesondere in permanenter Strömungsverbindung. Beispielsweise besteht das Trennelement 8 aus einem ersten Teil 10 sowie einem-zweiten Teil 11. Der zweite Teil 11 kann an dem ersten Teil 10 befestigt sein, beispielsweise ist er mit ihm vernietet.

Zwischen den beiden Teilen 10 und 11 des Trennelements 8 ist eine elastische Membran 12 gehalten, insbesondere klemmend gehalten. Die Membran 12 dient der Separierung einer Fluiddämpfungskammer 13 von der Fluidarbeitskammer 2. Beispielsweise ist die Fluiddämpfungskammer 13 in dem Trennelement 8, insbesondere in dem ersten Teil 10 des Trennelements 8, ausgebildet und wird von der Membran 12 vollständig übergriffen. Die Fluiddämpfungskammer 13 ist insoweit von der Fluidarbeitskammer 2 sowie der Fluidausgleichskammer 3 fluidtechnisch vollständig getrennt. Die Membran 12 weist beispielsweise einen Rand 14 auf, der einerseits in den ersten Teil 10 und andererseits in den zweiten Teil 11 des Trennelements 8 eingreift. Der zweite Teil 11 des Trennelements 8 ist fluiddurchlässig ausgestaltet, sodass eine unmittelbare Strömungsverbindung zwischen der Fluidarbeitskammer 2 und der Membran 12 vorliegt.

Die Lagerungseinrichtung 1 weist eine erste Lagerstelle 15 sowie eine zweite Lagerstelle 16 auf. Über die erste Lagerstelle 15 wird beispielsweise das Kraftfahrzeugaggregat und über die zweite Lagerstelle 16 die Kraftfahrzeugkarosserie an der Lagerungseinrichtung 1 befestigt, sodass nachfolgend das Kraftfahrzeugaggregat über die Lagerungseinrichtung 1 mit der Kraftfahrzeugkarosserie verbunden ist. Die erste Lagerstelle 15 liegt an einem Lagerdeckel 17 vor, welcher einen Federkörper 18, insbesondere einen Elastomerkörper, aufweist. Der Federkörper 18 ist beispielsweise über einen Lagerkern 19 mit der ersten Lagerstelle 15 verbunden. Selbstverständlich kann in Abweichung von der hier dargestellten Ausführungsform die erste Lagerstelle 15 auch unmittelbar an dem Lagerkern 19 vorliegen.

Der Federkörper 18 begrenzt gemeinsam mit dem Trennelement 8 die Fluidarbeitskammer 2. Insbesondere weist der Federkörper 18 eine Ausnehmung auf, welche von dem Trennelement 8 übergriffen beziehungsweise verschlossen wird. Der Lagerkern 19 ist vorzugsweise in den Federkörper 18 eingebettet, insbesondere in diesen eingegossen. Der Federkörper 18 ist beispielsweise mittels eines Stützteils 20 beziehungsweise einer Klemmschelle mit der Abdeckung 5 verbunden. Der Abdeckung 5 und das Stützteil 20 bilden ein Gehäuse 21 der Lagerungseinrichtung 1.

Beispielsweise ist der Federkörper 18 über das Stützteil 20 in einer Führungsausnehmung 22 einer Führungseinrichtung 23 befestigt. Mithilfe der Führungseinrichtung 23 kann insbesondere ein Ausknicken des Federkörpers 18 in radialer Richtung verhindert werden. Die Führungseinrichtung 23 wird bevorzugt an der Kraftfahrzeugkarosserie befestigt. An der Führungseinrichtung 23 kann die zweite Lagerstelle 16 vorliegen. In diesem Fall ist die Führungseinrichtung 23 vorzugsweise starr mit dem Gehäuse 21, insbesondere dem Stützteil 20 und/oder der Abdeckung 5, verbunden.

Um die Dämpfungswirkung der Lagerungseinrichtung 1 weiter zu verbessern beziehungsweise um eine unerwünschte Geräuschbildung zu vermeiden, ist die Fluiddämpfungskammer 13 über einen Drosselkanal 24 mit einer Außenumgebung 25 der Lagerungseinrichtung 1 strömungsverbunden. Erfindungsgemäß weist die Abdeckung 5 einen von der Fluidausgleichskammer 3 zumindest bereichsweise ringförmig umgriffenen Vorsprung 26 auf, der in Richtung der Fluiddämpfungskammer 13 ragt. In dem hier dargestellten Ausführungsbeispiel weist der Abdeckung 5 einen Strömungskanal 27 auf, der in dem Vorsprung 26 ausgebildet ist.

Es wird deutlich, dass das Trennelement 8 in der hier dargestellten Ausführungsform mittels des elastischen Elements 7 von dem Gehäuse 21, insbesondere von der Abdeckung 5 und dem Stützteil 20, entkoppelt ist. Zu diesem Zweck umgreift das elastische Element 7 das Trennelement 8 in Umfangsrichtung bezüglich der Längsmittelachse 4 vorzugsweise vollständig. Beispielsweise weist das elastische Element 7 eine Trennelementaufnahmenut 28 auf, die vorzugsweise in Umfangsrichtung durchgehend verläuft. Das Trennelement 8 greift in die Trennelementaufnahmenut 28 ein. Insbesondere ist es vorgesehen, dass sowohl der erste Teil 10 als auch der zweite Teil 11 des Trennelements 8 in die Trennelementaufnahmenut 28 eingreifen. Aufgrund der elastischen Wirkung des elastischen Elements 7 werden mithin die beiden Teile 10 und 11 aufeinander zu gedrängt und zusätzlich aneinander gehalten.

Um eine zuverlässige Befestigung des Stützteils 20 an der Abdeckung 5 zu erzielen, übergreift die Abdeckung 5 in axialer Richtung gesehen das Trennelement 8 wenigstens bereichsweise. Beispielsweise erstreckt sich die Abdeckung 5 in axialer Richtung ausgehend von der Fluidausgleichskammer 3 in Richtung der Fluidarbeitskammer 2 bis über die Trennelementaufnahmenut 28 und/oder den zweiten Teil 11 des Trennelements 8, ist also mit der Trennelementaufnahmenut 28 und/oder dem zweiten Teil 11 des Trennelements 8 in axialer Richtung überlappend angeordnet.

Vorzugsweise ist es vorgesehen, dass sowohl das Trennelement 8 als auch der Abdeckung 5 aus einem steifen Material bestehen. Insoweit ist das elastische Element 7, insbesondere dessen Haltebereich 9, zuverlässig klemmend zwischen der Abdeckung 5 und dem Trennelement 8 gehalten. Es kann vorgesehen sein, dass das elastische Element 7 beziehungsweise dessen Haltebereich 9 einen Radialvorsprung 29 aufweist, der sich in radialer Richtung nach außen erstreckt. Besonders bevorzugt greift der Radialvorsprung 29 dabei zwischen die Abdeckung 5 und das Stützteil 20 ein. Beispielsweise liegt der Radialvorsprung 29 einerseits an der Abdeckung 5 und/oder andererseits an dem Stützteil 20 an, insbesondere ist es zwischen der Abdeckung 5 und dem Stützteil 20 klemmend gehalten.

Das Stützteil 20 ist in axialer Richtung gesehen überlappend mit der Abdeckung 5 angeordnet. Besonders bevorzugt liegt das Stützteil 20 dabei unmittelbar an der Abdeckung 5 an und ist mittels einer Hintergriffsverbindung 30 an diesem befestigt. Durch das unmittelbare Aneinanderanliegen der Abdeckung 5 und des Stützteils 20 wird eine besonders stabile und dauerhafte Verbindung zwischen diesen beiden Elementen realisiert. Besonders vorteilhaft ist es dabei, wenn der Federkörper 18 in axialer Richtung beabstandet von dem elastischen Element 7 beziehungsweise dessen Haltebereich 9 angeordnet ist oder bündig mit diesem abschließt, jedoch nicht in axialer Richtung überlappend angeordnet ist. Entsprechend liegt der Federkörper 18 in radialer Richtung gesehen nicht zwischen der Abdeckung 5 und dem Stützteil 20 vor.

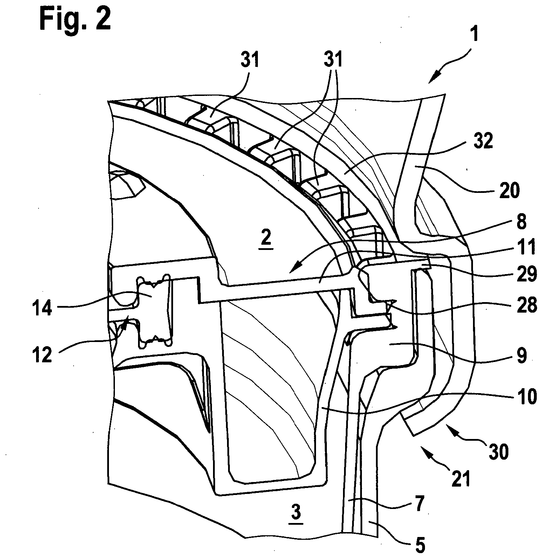

Die Figur 2 zeigt eine Detailschnittdarstellung der Lagerungseinrichtung 1. Deutlich sind die vorstehend beschriebenen Aspekte der Lagerungseinrichtung 1 zu erkennen, insbesondere die Entkoppelung des Trennelements 8 von dem Gehäuse 21 in Form des Abdeckung 5 und des Stützteils 20. Es ist zudem erkennbar, dass das elastische Element 7 in Umfangsrichtung voneinander beabstandete, sich in Richtung des Trennelements 8 erstreckende oder an diesem anliegende Stege 31 aufweist, von welchen lediglich einige beispielhaft gekennzeichnet sind. Die Stege 31 gehen beispielsweise von einem Grundkörper 32 des elastischen Elements 7 aus und erstrecken sich in radiale Richtung nach innen. Es kann vorgesehen sein, dass die Trennelementaufnahmenut 28 lediglich in den Stegen 31 vorliegt, also nicht in den Grundkörper 32 eingreift beziehungsweise in radialer Richtung von diesem beabstandet vorliegt. Alternativ kann es selbstverständlich vorgesehen sein, dass die Trennelementaufnahmenut 28 die Stege 31 in radialer Richtung vollständig durchgreift und in den Grundkörper 32 hineinragt.

Mithilfe der Entkopplung des Trennelements 8 von dem Gehäuse 20 mittels des elastischen Elements 7 wird eine hervorragende Dämpfungswirkung erzielt. Diese Dämpfungswirkung kann eingestellt werden über die Materialeigenschaften des elastischen Elements 7, also beispielsweise die Shorehärte des Materials. Das elastische Element 7 besteht dabei vorzugsweise aus einem Elastomer. Weitere Einflussgrößen auf die Dämpfungseigenschaften ist der Abstand in radialer Richtung zwischen dem Trennelement 8 und dem Gehäuse 21 sowie die Anzahl und/oder der Abstand der Stege 31. Hieraus ergeben sich einfach durchführbare und zusätzliche Abstimmungsmöglichkeiten für die Lagerungseinrichtung 1.

## Patentansprüche

1. Lagerungseinrichtung (1), insbesondere zur Lagerung eines Kraftfahrzeugaggregats an einer Kraftfahrzeugkarosserie, mit einer Fluidarbeitskammer (2), die über wenigstens einen Fluidkanal mit einer in einem Gehäuse (21) der Lagerungseinrichtung (1) vorliegenden Fluidausgleichskammer (3) in Strömungsverbindung steht, wobei die Fluidarbeitskammer (2) und die Fluidausgleichskammer (3) von einem Trennelement (8) separiert sind, in dem der wenigstens eine Fluidkanal vorliegt, wobei das Trennelement (8) mittels eines in Umfangsrichtung das Trennelement (8) umgreifenden elastischen Elements (7) von dem Gehäuse (21) entkoppelt ist, wobei das Gehäuse (21) eine die Fluidausgleichskammer (3) aufnehmende Abdeckung (5) und ein einen Federkörper (18) der Lagerungseinrichtung haltendes Stützteil (20) aufweist, **dadurch gekennzeichnet, dass** die Abdeckung (5) zwischen das Stützteil (20) und das elastische Element (7) derart eingreift, dass in radialer Richtung bezüglich einer Längsmittelachse (4) der Lagerungseinrichtung (1) gesehen das elastische Element (7), die Abdeckung (5) und das Stützteil (20) unmittelbar aufeinander folgen, und dass an dem Trennelement (8) eine elastische Membran (12) befestigt ist, die eine Fluiddämpfungskammer (13) strömungstechnisch von der Fluidarbeitskammer (2) separiert, wobei die Fluiddämpfungskammer (13) über einen Drosselkanal (24) mit einer Außenumgebung (25) der Lagerungseinrichtung (1) in Strömungsverbindung steht, wobei die Fluiddämpfungskammer (13) in dem Trennelement (8) angeordnet ist und der Drosselkanal (24) in einem von der Fluidausgleichskammer (3) zumindest bereichsweise ringförmig umgriffenen Vorsprung (26) der Abdeckung ausgebildet ist, der bis hin zu dem Trennelement (8) ragt.

2. Lagerungseinrichtung nach Anspruch 1, **dadurch gekennzeichnet, dass** das elastische Element (7) zusammen mit dem Trennelement (8) die Fluidausgleichskammer (3) einfasst.

3. Lagerungseinrichtung nach einem der vorhergehenden Ansprüche, **dadurch gekennzeichnet, dass** das Trennelement (8) über das elastische Element (7) an dem Gehäuse (21) befestigt ist.

4. Lagerungseinrichtung nach einem der vorhergehenden Ansprüche, **dadurch gekennzeichnet, dass** der Federkörper (18) über das Stützteil (20) in einer Führungsausnehmung (22) einer Führungseinrichtung (23) befestigt ist, wobei das Stützteil (20) zwischen die Führungseinrichtung (23) und die Abdeckung (5) derart eingreift, dass in radialer Richtung bezüglich der Längsmittelachse (4) gesehen das elastische Element (7), die Abdeckung (5), das Stützteil (20) und die Führungseinrichtung (23) aufeinander folgen.

5. Lagerungseinrichtung nach einem der vorhergehenden Ansprüche, **dadurch gekennzeichnet, dass** das elastische Element (7) zwischen der Abdeckung (5) und dem Stützteil (20) angeordnet, insbesondere klemmend gehalten ist.

6. Lagerungseinrichtung nach einem der vorhergehenden Ansprüche, **dadurch gekennzeichnet, dass** das Stützteil (20) die Abdeckung (5) in axialer Richtung bereichsweise übergreift und formschlüssig an der Abdeckung (5) befestigt ist.

7. Lagerungseinrichtung nach einem der vorhergehenden Ansprüche, **dadurch gekennzeichnet, dass** das elastische Element (7) eine Trennelementaufnahmenut (28) für das Trennelement (8) aufweist.

8. Lagerungseinrichtung nach einem der vorhergehenden Ansprüche, **dadurch gekennzeichnet, dass** das Trennelement (8) einen ersten Teil (10) und einen zweiten Teil (11) aufweist, wobei die beiden Teile (10, 11) aneinander befestigt sind und/oder beide in die Trennelementaufnahmenut (28) eingreifen.

9. Lagerungseinrichtung nach einem der vorhergehenden Ansprüche, **dadurch gekennzeichnet, dass** die Membran (12) zwischen dem ersten Teil (10) und dem zweiten Teil (11) klemmend gehalten ist.

## Claims

1. Bearing system (1), in particular for supporting a motor vehicle assembly on a motor vehicle body, said system comprising a fluid working chamber (2), which is fluidically connected by means of at least one fluid channel to a fluid compensation chamber (3) provided in a housing (21) of the bearing system (1), the fluid working chamber (2) and the fluid compensation chamber (3) being separated by a divider (8), in which the at least one fluid channel lies, wherein the divider (8) is decoupled from the housing (21) by means of an elastic element (7) engaging around the periphery of the divider (8), wherein the housing (21) has a cover (5), which accommodates the fluid compensation chamber (3), and a supporting part (20), which holds a flexible member (18) of the bearing system, **characterised in that** the cover (5) engages between the supporting part (20) and the elastic element (7), such that the elastic element (7), the cover (5) and the supporting part (20) follow one another directly in sequence when viewed in radial direction with respect to a longitudinal centre axis (4) of the bearing system (1), and that an elastic membrane (12), which separates a fluid damping chamber (13) rheologically from the fluid working chamber (2), is fastened on the divider (8), wherein the fluid damping chamber (13) is fluidically connected by way of a throttle channel (24) with an outer surrounding (25) of the bearing system (1), wherein the fluid damping chamber (13) is arranged in the divider (8) and the throttle channel (24) is formed in a protrusion (26) of the cover encompassed annularly at least in some regions by the fluid compensation chamber (3), said protrusion protruding towards the divider (8).

2. Bearing system according to claim 1, **characterised in that** the elastic element (7), together with the divider (8), encloses the fluid compensation chamber (3).

3. Bearing system according to any of the preceding claims, **characterised in that** the divider (8) is fastened to the housing (21) by way of the elastic element (7).

4. Bearing system according to any of the preceding claims, **characterised in that** the flexible member (18) is fastened by way of the supporting part (20) in a guide recess (22) of a guide device (23), wherein the supporting part (20) engages between the guide device (23) and the cover (5) in such a way that, viewed in radial direction with respect to the central longitudinal axis (4), the elastic element (7), the cover (5), the supporting part (20) and the guide device (23) follow one another in succession.

5. Bearing system according to any of the preceding claims, **characterised in that** the elastic element (7) is arranged between the cover (5) and the supporting part (20), in particular is held in a clamped manner.

6. Bearing system according to any of the preceding claims, **characterised in that** the supporting part (20) engages over the cover (5) in axial direction in some regions and is fastened in a form-fitting manner to the cover (5).

7. Bearing system according to any of the preceding claims, **characterised in that** the elastic element (7) has a divider receiving groove (28) for the divider (8).

8. Bearing system according to any of the preceding claims, **characterised in that** the divider (8) has a first part (10) and a second part (11), wherein the two parts (10, 11) are fastened to each other and/or both of them engage in the divider receiving groove (28).

9. Bearing system according to any of the preceding claims, **characterised in that** the membrane (12) between the first part (10) and the second part (11) is held in a clamped manner.

## Revendications

1. Système de montage (1), en particulier pour le montage d'un organe de véhicule sur une carrosserie de véhicule automobile, avec une chambre de travail fluidique (2) qui est en liaison d'écoulement par au moins un canal fluidique avec une chambre de compensation fluidique (3) présentant dans un carter (21) du système de montage (1), dans lequel la chambre de travail fluidique (2) et la chambre de compensation fluidique (3) sont séparées par un élément de séparation (8), dans lequel l'au moins un canal fluidique se présente, dans lequel l'élément de séparation (8) est découplé du carter (21) au moyen d'un élément (7) élastique entourant dans le sens périphérique l'élément de séparation (8), dans lequel le carter (21) présente un recouvrement (5) recevant la chambre de compensation fluidique (3) et une partie d'appui (20) maintenant un corps de ressort (18) du système de montage, **caractérisé en ce que** le recouvrement (5) se met en prise entre la partie d'appui (20) et l'élément élastique (7) de telle manière que vu dans le sens radial par rapport à un axe médian longitudinal (4) du système de montage (1) l'élément élastique (7), le recouvrement (5) et la partie d'appui (20) se suivent directement, et
qu'une membrane élastique (12) est fixée à l'élément de séparation (8), laquelle sépare une chambre d'amortissement de fluide (13) en écoulement de la chambre de travail de fluide (2), dans lequel la chambre d'amortissement de fluide (13) est en liaison d'écoulement par un canal d'étranglement (24) avec un environnement extérieur (25) du système de montage (1), dans lequel la chambre d'amortissement de fluide (13) est agencée dans l'élément de séparation (8) et le canal d'étranglement (24) est réalisé dans une saillie (26) entourée au moins par endroits en anneau par la chambre de compensation de fluide (3) du recouvrement qui pénètre jusqu'à l'élément de séparation (8).

2. Système de montage selon la revendication 1, **caractérisé en ce que** l'élément élastique (7) entoure conjointement avec l'élément de séparation (8) la chambre de compensation de fluide (3).

3. Système de montage selon l'une des revendications précédentes, **caractérisé en ce que** l'élément de séparation (8) est fixé par l'élément élastique (7) au carter (21).

4. Système de montage selon l'une des revendications précédentes, **caractérisé en ce que** le corps de ressort (18) est fixé par la partie d'appui (20) dans un évidement de guidage (22) d'un dispositif de guidage (23), dans lequel la partie d'appui (20) vient en prise entre le dispositif de guidage (23) et le recouvrement (5) de telle manière que vu dans le sens radial par rapport à l'axe médian longitudinal (4) l'élément élastique (7), le recouvrement (5), la partie d'appui (20) et le dispositif de guidage (23) se suivent.

5. Système de montage selon l'une des revendications précédentes, **caractérisé en ce que** l'élément élastique (7) est agencé, en particulier maintenu par serrage entre le recouvrement (5) et la partie d'appui (20).

6. Système de montage selon l'une des revendications précédentes, **caractérisé en ce que** la partie d'appui (20) recouvre le recouvrement (5) dans le sens axial par endroits et est fixée par complémentarité de formes au recouvrement (5).

7. Système de montage selon l'une des revendications précédentes, **caractérisé en ce que** l'élément élastique (7) présente une rainure de réception d'élément de séparation (28) pour l'élément de séparation (8).

8. Système de montage selon l'une des revendications précédentes, **caractérisé en ce que** l'élément de séparation (8) présente une première partie (10) et une seconde partie (11), dans lequel les deux parties (10, 11) sont fixées l'une à l'autre et/ou viennent en prise toutes les deux dans la rainure de réception d'élément de séparation (28).

9. Système de montage selon l'une des revendications précédentes, **caractérisé en ce que** la membrane (12) est maintenue par serrage entre la première partie (10) et la seconde partie (11).
